# EUROPÄISCHE PATENTSCHRIFT

(11) **EP 1 267 625 B1**
(45) Veröffentlichungstag und Bekanntmachung des Hinweises auf die Patenterteilung: **18.02.2004**
(21) Anmeldenummer: 01935934.8
(22) Anmeldetag: 22.03.2001
(51) Int. Cl.: A01N 59/20

(54) **VERFAHREN UND VORRICHTUNG ZUR BEKÄMPFUNG VON PILZBEFALL BEI IN EINEM GESCHLOSSENEN NÄHRSTOFFSYSTEM GEHALTENEN PFLANZEN, INSBESONSERE IM GEWÄCHSHAUSANBAU**
METHOD AND DEVICE FOR COMBATING FUNGI IN PLANTS THAT ARE KEPT IN A CLOSED NUTRITION SYSTEM, ESPECIALLY IN GREENHOUSE CULTIVATION
PROCEDE ET DISPOSITIF POUR LUTTER CONTRE DES CHAMPIGNONS AFFECTANT DES PLANTES MAINTENUES DANS UN SYSTEME NUTRITIF FERME, EN PARTICULIER DANS DES CULTURES EN SERRE

(30) Priorität: 23.03.2000 DE 10014176
(43) Veröffentlichungstag der Anmeldung: 02.01.2003
(73) Patentinhaber: Bühre, Werner, 37133 Friedland (DE); De Lasson, Aksel, 8220 Braband (DK)
(72) Erfinder: BÜHRE, Werner, 37133 Friedland (DE); DE LASSON, Aksel, DK-8220 Braband (DK); JENSEN, Orla, Lund, DK-8281 Mundelstrup (DK)
(74) Vertreter: Hagemann, Heinrich, Dr.
(86) Internationale Anmeldenummer: PCT/DE2001/001103
(87) Internationale Veröffentlichungsnummer: WO 2001/070018

(56) Entgegenhaltungen:
- DATABASE WPI Derwent Publications Ltd., London, GB; AN 1999-089271 XP002176990 ABLE CO LTD: "Disinfectant preparing device for plants - comprises cathode and anode arranged in water passage" & JP 10 323670 A
- DATABASE WPI Derwent Publications Ltd., London, GB; AN 1983-799247 XP002176991 MOLD VINE GROWING: "Feeding plants with water and mineral elements-by using bath of nutrient solution with plate electrodes through which current is applied" & SU 982 589 A
- CHEMICAL ABSTRACTS, vol. 126, no. 7, 17. Februar 1997 (1997-02-17) Columbus, Ohio, US; abstract no. 86093, OZAWA, ITSURO ET AL: "Apparatus for generation of bactericidal metal ions" XP002176989 & JP 08 301709 A (HANEDA KK, JAPAN) 19. November 1996 (1996-11-19)

## Beschreibung

Die Erfindung betrifft ein Verfahren und eine Vorrichtung zur Bekämpfung von Pilzbefall bei in einem geschlossenen Nährstoffsystem gehaltenen Pflanzen, insbesondere im Gewächshausanbau, durch Zugabe von Cu-lonen zu der Nährstofflösung, wobei die Konzentration der Nährstofflösung über deren Leitfähigkeit ständig gemessen und durch Zugabe von Nährstoffen auf einem konstanten Wert gehalten wird.

Beim Pflanzenanbau in Gewächshäusern mit geschlossenen Nährstoffsystemen kann es zu Problemen durch Pilze kommen, deren Sporen über die zirkulierende Nährstofflösung verbreitet werden. Die Pilze, vorzugsweise Pythium und Phytophthora siedeln sich im Bereich der Wurzeln der Pflanzen an und schädigen diese. Zur Bekämpfung der Pilze ist es üblich, Fungizide einzusetzen. Es sind auch bereits Versuche gemacht worden, der Nährstofflösung Kupfersulfat zuzusetzen, das Kupfer als sehr effektives Mittel gegen Pilzsporen bekannt ist. Es ist hier jedoch nicht gelungen, in der Nährstofflösung Cu-lonen sicher in einer sehr geringen Konzentration freizusetzen, wie sie erforderlich ist, die Sporen der Schadpilze abzutöten. Bei der Zugabe von Kupfersulfat läßt es sich nicht vermeiden, daß plötzlich die Schwelle überschritten wird, an der Cu-lonen in einer Konzentration frei werden, die für Menschen, Pflanzen und Tiere giftig ist. Die erforderliche Konzentration von 0,2 bis 0,3 ppm an freien Cu-lonen in der Nährstofflösung ist nicht einstellbar.

Der Erfindung liegt die Aufgabe zugrunde, eine Möglichkeit zu schaffen, in der Nährstofflösung eines geschlossenen Nährstoffsystems Cu-lonen in einer geringen Konzentration dosiert freizusetzen, wie sie zur Inaktivierung von Pilzsporen ausreichend und erforderlich ist.

Die Aufgabe wird erfindungsgemäß durch die Merkmale der Ansprüche 1 und 12 gelöst. Die weitere Ausgestaltung der Erfindung ist den Unteransprüchen zu entnehmen.

Indem in die Nährstofflösung freie Cu-lonen über ein von einer Cu-Anode und einer Kathode gebildetes Elektrodenpaar abgegeben werden, das in der Nährstofflösung angeordnet ist, wobei über eine zugeordnete Steuereinheit die Abgabe von freien Cu-lonen angepaßt an den Bedarf einstellbar ist, wird erreicht, daß in der Nährstofflösung die Schwelle der Bindung der Cu-lonen überschritten wird und in der an die Pflanzen gelangende Nährstofflösung freie Cu-lonen in einer Konzentration von 0,1 bis 0,8 ppm vorhanden sind. Die dem Elektrodenpaar zugeordnete Steuereinheit ermöglicht es, die Spannung bzw. die Stromstärke so einzustellen, daß der genannte Wert für die Konzentration der Cu-lonen in der Nährstofflösung sicher gehalten wird.

Da zur Überwindung der Schwelle der Bindung der Cu-lonen in der Nährstofflösung Cu-lonen in großer Menge freigesetzt werden müssen, ist es erforderlich, an das Elektrodenpaar eine hohe Spannung anzulegen, deren Aufbereitung und insbesondere auch deren Steuerung in der Praxis einen unverhältnismäßig hohen technischen Aufwand erforderlich macht. Es ist daher gemäß einer bevorzugten Ausführungsform der Erfindung vorgesehen, daß die freien Cu-lonen in die Nährstofflösung über Cu-Anoden und Kathoden mehrerer in Kaskadenschaltung angeordneter Elektrodenpaare abgegeben werden. Hier addiert sich die Wirkung der Elektrodenpaare mit dem Effekt, daß z. B. mit einer niedrigen Spannung von beispielsweise 24 Volt gearbeitet werden kann.

Wie sich gezeigt hat, ist es mittels des erfindungsgemäßen Verfahrens möglich, in der Nährstofflösung eine Konzentration der freien Cu-lonen von 0,2 bis 0,3 ppm einzustellen. Es handelt sich hier um einen optimalen Wert, der geeignet ist, Pilzsporen zu inaktivieren bzw. zu vergiften, ohne jedoch den Pflanzen zu schaden. Dieser Wert liegt außerdem weit unter einem Wert, der zu einer Anreicherung von Kupfer in den Pflanzen in einer für Menschen und Tiere schädlichen Konzentration führen könnte.

In weiterer Ausgestaltung der Erfindung kann es zweckmäßig sein, die Konzentration der freien Cu-lonen zusätzlich mittels einer in der Nährstofflösung zusätzlich angeordneten Kathode, deren elektrisches Potential niedriger liegt als das der Kathode des Elektrodenpaares, über eine zugeordnete Steuereinheit einzustellen.

Hinsichtlich der Vorrichtung ist es vorgesehen, daß in der Nährstofflösung eine Cu-Anode und eine Kathode eines Elektrodenpaares angeordnet sind und daß eine Steuereinheit vorgesehen ist, mittels der die Abgabe von freien Cu-lonen derart einstellbar ist, daß die Schwelle der Bindung der Cu-lonen in der Nährstofflösung überschritten wird und in der an die Pflanzen gelangenden Nährstofflösung freie Cu-lonen in einer Konzentration von 0,1 bis 0,8 ppm vorhanden sind. Hierbei treten die gleichen, im Zusammenhang mit dem erfindungsgemäßen Verfahren bereits geschilderten Vorteile auf.

Wie bereits vorstehend darauf hingewiesen worden ist, sind vorzugsweise mehrere Elektrodenpaare in Kaskadenschaltung angeordnet. Es ergeben sich auch hier die bereits geschilderten Vorteile.

Die erfindungsgemäße Vorrichtung ermöglicht es im übrigen sicherzustellen, daß in der an die Pflanzen gelangenden Nährstofflösung freie Cu-lonen in einer Konzentration von 0,2 bis 0,3 ppm vorhanden sind. Wie bereits ausgeführt, handelt es sich hier um eine ideale Konzentration der Cu-lonen.

Vorteilhaft ist es, wenn auch die Kathode der Elektrodenpaare aus Kupfer besteht und wechselnd die Anode als Kathode und die Kathode als Anode wirkend schaltbar sind. Es wird so der Verschleiß der Elektroden erheblich reduziert, da wechselnd Kupfer abgetragen und abgelagert wird.

Wie bereits ausgeführt, kann es vorteilhaft sein, wenn in der Nährstofflösung eine zusätzliche, auf einem elektrisch niedrigerem Potential als die Kathode des Elektrodenpaares liegende Kathode mit einer zugeordneten Steuereinheit angeordnet ist.

Vorzugsweise sind die Elektrodenpaare in einem Nährstofftank angeordnet. Auch die zusätzliche Elektrode ist vorzugsweise in dem Nährstofftank angeordnet.

Sofern der Nährstofftank mit einem Umwälzkreislauf versehen ist, ist es so möglich, eine ständige Durchmischung und somit eine Stabilisierung der Konzentration der Cu-lonen zu erzielen.

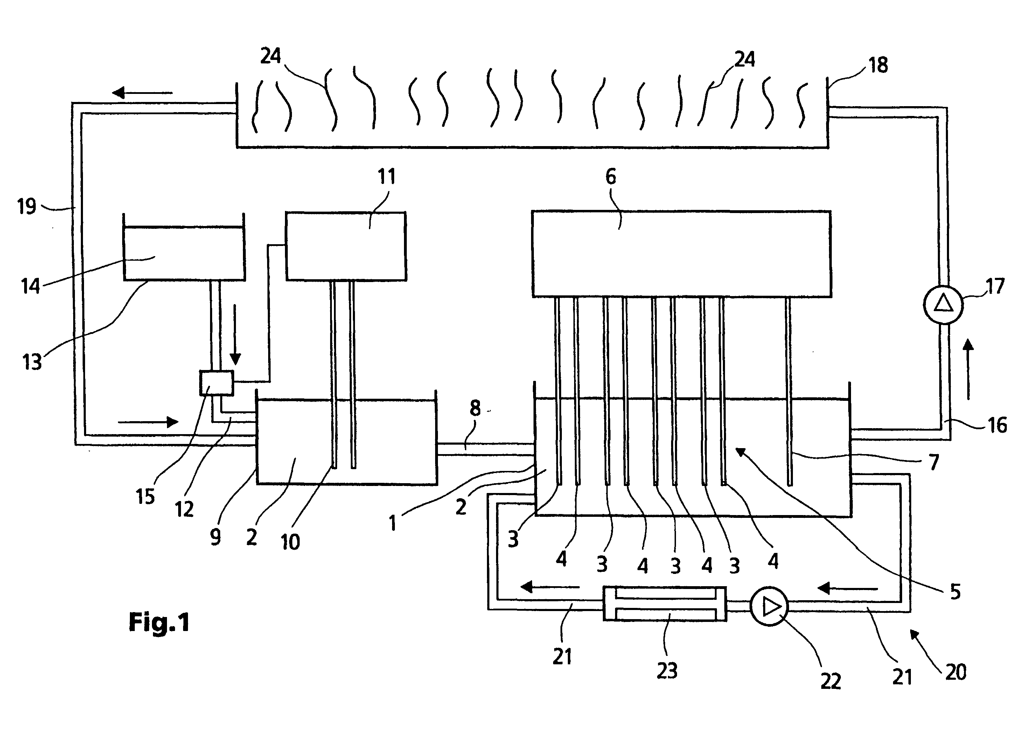

In der Zeichnung ist ein Ausführungsbeispiel der Erfindung dargestellt und wird im folgenden näher beschrieben. Die Zeichnung zeigt eine Vorrichtung mit in einem Nährstofftank in Kaskadenschaltung angeordneten Elektrodenpaaren in schematischer Darstellung.

in der Zeichnung ist mit 1 ein Nährstofftank bezeichnet, der mit einer Nährstofflösung 2 gefüllt ist. In der Nährstofflösung 2 sind Cu-Anoden 3 und Kathoden 4 mehrerer Elektrodenpaare 5 angeordnet. Den Elektrodenpaaren 5 ist eine Steuereinheit 6 zugeordnet. Außerdem ist in der Nährstofflösung 2 eine zusätzliche Kathode 7 angeordnet, deren elektrisches Potential niedriger einstellbar ist als das der Kathode 4 des Elektrodenpaares 5. Die Steuereinheit 6 auch der zusätzlichen Kathode 7 zugeordnet.

Der Nährstofftank 1 ist über eine Rohrleitung 8 mit einem Mischtank 9 verbunden, in dem ein Sensor 10 mit einer Steuereinheit 11 angeordnet ist. Über den Sensor 10 wird die Konzentration der Nährstofflösung 2 über deren elektrische Leitfähigkeit gemessen. Dem Mischtank 9 wird über eine Rohleitung 12 aus einem Vorratstank 13 ein Nährstoffkonzentrat 14 dosiert zugeführt. Die Steuereinheit 11 des Sensors 10 steuert über ein in der Rohrleitung 12 angeordnetes Ventil 15 die Zufuhr des Nährstoffkonzentrates 14 in den Mischtank 9.

Von dem Nährstofftank 1 ist eine Rohrleitung 16, in der eine Pumpe 17 angeordnet ist, an einen Pflanzentisch 18 geführt. Vom Pflanzentisch 18 führt eine Rücklaufleitung 19 in den Mischtank 9. Dem Nährstofftank 1 ist ein Umwälzkreislauf 20 zugeordnet, der von einer Rohrleitung 21 und einer Förderpumpe 22 gebildet ist. Im Umwälzkreislauf 20 ist eine Behandlungseinheit 23 für die Nährstofflösung 2 angeordnet.

Zur Versorgung von im Pflanzentisch 18 angeordneten, in der Zeichnung nicht dargestellten Pflanzen 24 mit der Nährstofflösung 2 wird mittels der Pumpe 17 Nährstofflösung aus dem Nährstofftank 1 in den Pflanzentisch 18 gefördert. Dann gelangt die Nährstofflösung 2 aus dem Pflanzentisch 18 über die Rücklaufleitung 19 des Nährstoffsystems in den Mischtank 9. Die Nährstofflösung 2 wird dem Pflanzentisch 18 in der Regel in Zeitintervallen durch Zuschaltung der Pumpe 17 zugeführt. Vorzugsweise erfolgt dann auch die Freisetzung der freien Cu-lonen im Nährstofftank 1.

Im Mischtank 9 wird mittels des Sensors 10 die Konzentration der Nährstofflösung 2 über deren elektrische Leitfähigkeit gemessen. Die dem Sensor 10 zugeordnete Steuereinheit 11 ermöglicht es, durch Betätigung des Ventils 15 Nährstoffkonzentrat 14 aus dem Vorratstank 13 über die Rohrleitung 12 dem Mischtank 9 dosiert zuzuführen. Es ist so möglich, die Konzentration der Nährstofflösung 2 im Mischtank 9. Aus dem Mischtank 9 gelangt die in ihrer Konzentration eingestellte Nährstofflösung 2 über die Rohrleitung 8 in den Nährstofftank 1.

Im Nährstofftank 1 bewirken die Elektrodenpaare 5 eine Anreicherung der Nährstofflösung 2 mit freien Cu-lonen, indem in der Steuereinheit 6 die benötigte Spannung und die erforderliche Stromstärke zur Freigabe der Cu-lonen in die Nährstofflösung 2 unter Überwindung der Bindungsschwelle eingestellt werden. Da die Konzentration der Nährstofflösung 2 über den Sensor 10 mit dessen Steuereinheit 11 konstant gehalten wird, ist es möglich, auch die von dieser Konzentration abhängige Stromstärke zwischen den Anoden 3 und den Kathoden 4 der Elektrodenpaare 5 konstant auf einem eingestellten optimalen Wert zu halten. Wie sich gezeigt hat, kann so in der Nährstofflösung 2 eine konstante Konzentration an freien Cu-Ionen von vorzugsweise 0,2 bis 0,3 ppm eingestellt werden. Eine derartige Konzentration ist optimal geeignet, etwa in das Nährstoffsystem gelangte Sporen im Bereich der Wurzeln der im Pflanzentisch 18 angeordneten Pflanzen 24 sicher abzutöten.

Es wird hier der vorteilhafte Effekt genutzt, daß bereits geringe Mengen an freien Cu-lonen geeignet sind, einen Pilzbefall sicher zu verhindern. Andererseits ist es sichergestellt, daß keine so hohe Konzentration an freien Cu-lonen vorliegt, daß eine Schädigung der Pflanzen 24 bzw. eine Belastung der Pflanzen mit Kupfer erfolgt.

Indem die Elektrodenpaare 5 in Kaskadenschaltung angeordnet sind, ist es zudem möglich, die an den Elektrodenpaaren wirksamen Stromstärken mittels einer niedrigen Steuerspannung von z. B. 24 V einzustellen und dennoch die Bindungsschwelle der freien Cu-lonen in der Nährstofflösung 2 zu überschreiten.

Die im Nährstofftank 1 zusätzlich angeordnete einzelne Kathode 7 ermöglicht eine Feinabstimmung der Konzentration der freien Cu-lonen in der Nährstofflösung 2, indem dort über die Steuereinheit 6 zusätzlich zur Ansteuerung der Elektrodenpaare 5 ein elektrisches Potential angelegt wird, das niedriger liegt als das der Kathode 4 des Elektrodenpaares 5. Die zusätzliche Kathode 7 wirkt in der Form, daß in der Nährstofflösung 2 überschüssige freie Cu-lonen abgefangen werden. Auch das Potential der Kathode 7 kann mittels einer niedrigen Steuerspannung von z. B. 24 V eingestellt werden, da hier die Konzentration der freien Cu-lonen in der Nährstofflösung 2 lediglich korrigiert wird.

Mittels des dem Nährstofftank 1 zugeordneten Umwälzkreislaufs 20 ist es durch Einschalten der Förderpumpe 22 möglich, die dort befindliche Nährstofflösung 2 umzuwälzen, so daß eine gleichmäßige Verteilung der freien Cu-lonen und der Nährstoffe sichergestellt werden kann. Eine im Umwälzkreislauf 20 angeordnete Behandlungseinheit 23 ermöglicht eine zusätzliche Behandlung der Nährstofflösung 2, um z. B. die Wasserhärte in vorteilhafter Weise herabzusetzen.

## Patentansprüche

1. Verfahren zur Bekämpfung von Pilzbefall bei in einem geschlossenen Nährstoffsystem gehaltenen Pflanzen (24), insbesondere im Gewächshausanbau, durch Zugabe von Cu-lonen zu der Nährstofflösung (2), wobei die Konzentration der Nährstofflösung (2) über deren Leitfähigkeit ständig gemessen und durch Zugabe von Nährstoffen auf einem konstanten Wert gehalten wird, **dadurch gekennzeichnet, daß** in die Nährstofflösung freie Cu-lonen über ein von einer Cu-Anode (3) und einer Kathode (4) gebildetes Elektrodenpaar (5) abgegeben werden, das in der Nährstofflösung (2) angeordnet ist, wobei über eine zugeordnete Steuereinheit (6) die Abgabe von freien Cu-lonen angepaßt an den Bedarf derart einstellbar ist, daß in der Nährstofflösung (2) die Schwelle der Bindung der Cu-lonen überschritten wird und in der an die Pflanzen gelangenden Nährstofflösung (2) freie Cu-lonen in einer Konzentration von 0,1 bis 0,8 ppm vorhanden sind.

2. Verfahren nach Anspruch 1, **dadurch gekennzeichnet, daß** die freien Cu-lonen in die Nährstofflösung (2) über Cu-Anoden (3) und Kathoden (4) mehrerer in Kaskadenschaltung angeordneter Elektrodenpaare (5) abgegeben werden.

3. Verfahren nach den Ansprüchen 1 und 2, **dadurch gekennzeichnet, daß** die Konzentration der freien Cu-lonen 0,2 bis 0,3 ppm beträgt.

4. Verfahren nach den Ansprüchen 1 und 2, **dadurch gekennzeichnet, daß** mittels einer in der Nährstofflösung (2) zusätzlich angeordneten Anode (7), deren elektrisches Potential niedriger liegt als das der Kathode des Elektrodenpaares, die Konzentration der freien Cu-lonen einstellbar ist.

5. Vorrichtung zur Bekämpfung von Pilzbefall bei Pflanzen (24), die in einem geschlossenen Nährstoffsystem, gehalten werden, das einen Nährstofftank (1) aufweist, aus dem Nährstofflösung (2) über ein Rohrleitungssystem zirkulierend an Pflanzentische (18) gefördert wird und in dem ein Sensor angeordnet ist, über den die Konzentration der Nährstofflösung (2) über deren elektrische Leitfähigkeit ständig gemessen und durch dosierte Zugabe von Nährstoffen aus einem Vorratsbehälter auf einem konstanten Wert gehalten wird, **dadurch gekennzeichnet, daß** in der Nährstofflösung (2) eine Cu-Anode (3) und eine Kathode (4) wenigstens eines Elektrodenpaares (5) angeordnet sind und daß eine Steuereinheit (6) vorgesehen ist, mittels der die Abgabe von freien Cu-lonen derart einstellbar ist, daß die Schwelle der Bindung der Cu-lonen in der Nährstofflösung (2) überschritten wird und in der an die Pflanzen gelangende Nährstofflösung (2) freie Cu-lonen in einer Konzentration von 0,1 bis 0,8 ppm vorhanden sind.

6. Vorrichtung nach Anspruch 5, **dadurch gekennzeichnet, daß** mehrere Elektrodenpaare (5) in Kaskadenschaltung angeordnet sind.

7. Vorrichtung nach den Ansprüchen 5 und 6, **dadurch gekennzeichnet, daß** in der an die Pflanzen gelangende Nährstofflösung (2) freie Cu-lonen in einer Konzentration von 0,2 bis 0,3 ppm vorhanden sind.

8. Vorrichtung nach den Ansprüchen 5 und 6, **dadurch gekennzeichnet, daß** auch die Kathode der Elektrodenpaare (5) aus Kupfer besteht und daß wechselnd die Anode (3) als Kathode und die Kathode (4) als Anode wirkend schaltbar sind.

9. Vorrichtung nach den Ansprüchen 5 und 6, **dadurch gekennzeichnet, daß** in der Nährstofflösung (2) eine zusätzliche Kathode (7) angeordnet ist, deren elektrisches Potential niedriger liegt als das elektrische Potential der Kathode (4) des Elektrodenpaares (5).

10. Vorrichtung nach den Ansprüchen 5 und 6, **dadurch gekennzeichnet, daß** die Elektrodenpaare (5) in einem Nährstofftank (1) angeordnet sind.

11. Vorrichtung nach Anspruch 9, **dadurch gekennzeichnet, daß** die zusätzliche Kathode (7) in dem Nährstofftank (1) angeordnet ist.

12. Vorrichtung nach Anspruch 10, **dadurch gekennzeichnet, daß** der Nährstofftank (1) mit einem Umwälzkreislauf (20) versehen ist.

## Claims

1. Method for combating fungi in plants (24) kept in a closed nutrition system, in particular under greenhouse cultivation, by adding Cu ions to the nutrient solution (2), the concentration of the nutrient solution (2) being continuously measured via its conductivity and being maintained at a constant value by adding nutrients, **characterised in that** free Cu ions are released into the nutrient solution via an electrode pair (5) comprised of a Cu anode (3) and a cathode (4) arranged in the nutrient solution (2), the release of free Cu ions being adjusted to requirements via an associated control unit (6) such that in the nutrient solution (2) the threshold of the Cu ion binding is exceeded and free Cu ions are present in a concentration of 0.1 to 0.8 ppm in the nutrient solution (2) delivered to the plants.

2. Method according to claim 1, **characterised in that** the free Cu ions are released into the nutrient solution (2) via Cu anodes (3) and cathodes (4) of a plurality of electrode pairs (5) arranged in a cascade circuit.

3. Method according to claims 1 and 2, **characterised in that** the concentration of the free Cu ions is 0.2 to 0.3 ppm.

4. Method according to claims 1 and 2, **characterised in that** the concentration of free Cu ions is adjustable using an additional anode (7) arranged in the nutrient solution (2) having an electrical potential lower than that of the cathode of the electrode pair.

5. Apparatus for combating fungi in plants (24) kept in a closed nutrition system, comprising a nutrient tank (1) from which nutrient solution (2) is conveyed in a circulating manner via a pipeline system to plant tables (18), and in which a sensor is arranged, via which the concentration of the nutrient solution (2) is continuously measured via its electrical conductivity and is maintained at a constant value by metered addition of nutrients from a storage reservoir, **characterised in that** a Cu anode (3) and a cathode (4) of at least one electrode pair (5) are arranged in the nutrient solution (2), and **in that** a control unit (6) is provided by means of which the release of free Cu ions can be adjusted such that the Cu ion binding threshold in the nutrient solution (2) is exceeded and free Cu ions are present in a concentration of 0.1 to 0.8 ppm in nutrient solution (2) delivered to the plants.

6. Apparatus according to claim 5, **characterised in that** a plurality of electrode pairs (5) are arranged in a cascade circuit.

7. Apparatus according to claims 5 and 6, **characterised in that** free Cu ions in a concentration of 0.2 to 0.3 ppm are present in the nutrient solution (2) delivered to the plants.

8. Apparatus according to claims 5 and 6, **characterised in that** the cathodes of the electrode pairs (5) are also made of copper, and the anode (3) is switchable to act alternately as a cathode and the cathode (4) is switchable to act alternately as an anode.

9. Apparatus according to claims 5 and 6, **characterised in that** an additional cathode (7) is arranged in the nutrient solution (2), said additional cathode having an electrical potential lower than that of the cathode (4) of the electrode pair (5).

10. Apparatus according to claims 5 and 6, **characterised in that** the electrode pairs (5) are arranged in a nutrient tank (1).

11. Apparatus according to claim 9, **characterised in that** the additional cathode (7) is arranged in the nutrient tank (1).

12. Apparatus according to claim 10, **characterised in that** the nutrient tank (1) is provided with a recirculating loop (20).

## Revendications

1. Procédé pour combattre l'infestation par les champignons chez des plantes (24) maintenues dans un système de substances nutritives fermé, en particulier dans une installation de serre, par addition d'ions Cu à la solution de substances nutritives (2) dans lequel la concentration de la solution de substances nutritives (2) est continuellement mesurée par le biais de sa conductivité et est maintenue à une valeur constante par addition de substances nutritives, **caractérisé en ce que** des ions Cu libres sont libérés dans la solution de substances nutritives, au moyen d'une paire d'électrodes (5) formée d'une anode en Cu (3) et d'une cathode (4) et qui est disposée dans la solution de substances nutritives (2), la libération d'ions Cu libres pouvant être réglée à la demande de façon adaptée aux besoins, au moyen d'une unité de commande associée (6), de telle manière que, dans la solution de substances nutritives (2), le seuil de la fixation des ions Cu est dépassé et que dans la solution de substances nutritives (2) qui parvient aux plantes, il existe des ions Cu libres dans une concentration de 0,1 à 0,8 ppm.

2. Procédé selon la revendication 1, **caractérisé en ce que** les ions Cu libres sont libérés dans la solution de substances nutritives (2) au moyen d'anodes en Cu (3) et de cathodes (4) de plusieurs paires d'électrodes (5) connectées en cascade.

3. Procédé selon les revendications 1 et 2, **caractérisé en ce que** la concentration
des ions Cu libres est de 0,2 à 0,3 ppm.

4. Procédé selon les revendications 1 et 2, **caractérisé en ce que** la concentration
des ions Cu libres peut être réglée au moyen d'une anode (7) disposée en supplément dans la solution de substances nutritives (2) et dont le potentiel électrique est plus bas que celui de la cathode de la paire d'électrodes.

5. Dispositif pour combattre l'infestation par les champignons chez des plantes (24)
qui sont maintenues dans un système de substances nutritives fermé qui comprend un bac à substances nutritives (1) d'où une solution de substances nutritives (2) est refoulée par l'intermédiaire d'un système de tuyauterie en circulant sur des tables à plantes (18) et dans lequel est disposé un capteur par l'intermédiaire duquel la concentration de la solution de substances nutritives (2) est continuellement mesurée par le biais de sa conductibilité électrique, et est maintenue à une valeur constante par une addition dosée de substances nutritives provenant d'un réservoir, **caractérisé en ce que**, dans la solution de substances nutritives (2), sont disposées une anode en Cu (3) et une cathode (4) d'au moins une paire d'électrodes (5) et **en ce qu'**il est prévu une unité de commande (6) au moyen de laquelle la libération d'ions Cu libres peut être réglée de telle manière que le seuil de fixation des ions Cu dans la solution de substances nutritives (2) soit dépassé et que, dans la solution de substances nutritives (2) qui parvient aux plantes, il existe des ions Cu libres dans une concentration de 0,1 à 0,8 ppm.

6. Dispositif selon la revendication 5, **caractérisé en ce que** plusieurs paires d'électrodes (5) sont connectées en cascade.

7. Dispositif selon les revendications 5 et 6, **caractérisé en ce que**, dans la solution de substances nutritives (2) qui parvient aux plantes, les ions Cu libres sont présents en une concentration de 0,2 à 0,3 ppm.

8. Dispositif selon les revendications 5 et 6, **caractérisé en ce que** la cathode des
paires d'électrodes (5) est elle aussi en cuivre et **en ce que**, l'anode (3) peut être connectée alternativement en cathode et la cathode (4) alternativement en anode.

9. Dispositif selon les revendications 5 et 6, **caractérisé en ce que**, dans la solution
de substances nutritives (2) est disposée une cathode supplémentaire (7) dont le potentiel électrique est plus bas que le potentiel électrique de la cathode (4) de la paire d'électrodes (5).

10. Dispositif selon les revendications 5 et 6, **caractérisé en ce que** les paires
d'électrodes (5) sont disposées dans un bac à substances nutritives (1).

11. Dispositif selon la revendication 9, **caractérisé en ce que** la cathode
supplémentaire (7) est disposée dans le bac à substances nutritives (1).

12. Dispositif selon la revendication 10, **caractérisé en ce que** le bac à substances
nutritives (1) est muni d'un circuit de re-circulation (20).
